# EUROPÄISCHE PATENTANMELDUNG

(11) **EP 1 906 072 A2**
(43) Veröffentlichungstag der Anmeldung: **02.04.2008**
(21) Anmeldenummer: 07115393.6
(22) Anmeldetag: 31.08.2007
(51) Int. Cl.: F16L 11/118, F15D 1/02

(54) **Rohrstück in einer Rohrleitung für Fluide**

(30) Priorität: 27.09.2006 DE 202006014961 U
(71) Anmelder: MANN+HUMMEL GmbH, 71638 Ludwigsburg (DE)
(72) Erfinder: Walz, Stefan, 71634, Ludwigsburg (DE)

(57) **Zusammenfassung**

Ein Rohrstück (1) in einer Rohrleitung für Fluide weist in der Rohrwandung (2) mindestens eine Falte (3) auf, die spiralförmig um die Rohrlängsachse (4) verläuft, wobei das Rohrstück (1) axial und in Querrichtung flexibel ausgebildet ist.

## Beschreibung

### Technisches Gebiet

Die Erfindung bezieht sich auf ein Rohrstück in einer Rohrleitung für Fluide nach dem Oberbegriff des Anspruches 1.

### Stand der Technik

In der DE 42 28 334 A1 wird eine Saugrohranlage für eine Brennkraftmaschine beschrieben, über die den Zylindern des Motors Verbrennungsluft zugeführt wird. Die Saugrohranlage umfasst in einem Gehäuse eine den Zylindern entsprechende Anzahl an Saugrohren, denen jeweils eine Schwenkklappe zugeordnet ist, über die der Querschnitt des Saugrohrs zu verstellen ist. Um eine kompakte Ausführung zu erzielen, weisen die Saugrohre einen gekrümmten Verlauf auf, was den Vorteil mit sich zieht, dass die Schwenkklappe in den Saugrohren an einer gemeinsamen, durchgehenden Stellwelle gehalten und von dieser zu verstellen sind.

Um die Leistungsfähigkeit moderner Brennkraftmaschinen bei reduziertem Kraftstoffverbrauch zu verbessern, kann es zweckmäßig sein, die Verbrennungsluft unter einem Drall in die Brennräume der Brennkraftmaschine einzuleiten, wodurch eine verbesserte Verwirbelung des Kraftstoff-Luft-Gemisches in den Brennräumen erzielt wird.

### Offenbarung der Erfindung

Der Erfindung liegt die Aufgabe zugrunde, mit einfachen konstruktiven Maßnahmen den Strömungswiderstand von Fluiden, die durch ein Rohrstück strömen, zu verringern. Dies soll insbesondere für gekrümmte Rohrstücke gelten. Zweckmäßig soll dem durchströmenden Fluid außerdem ein Drall aufgeprägt werden.

Diese Aufgabe wird erfindungsgemäß mit den Merkmalen des Anspruches 1 gelöst. Die Unteransprüche geben zweckmäßige Weiterbildungen an.

Das erfindungsgemäße Rohrstück zeichnet sich dadurch aus, dass in die Rohrwandung Falten eingebracht sind, die spiralförmig um die Rohrlängsachse verlaufen. Aufgrund der Spiralform wird das durch das Innere des Rohrstücks strömende Fluid zumindest im Bereich der randseitigen Strömung, welches sich unmittelbar benachbart zur Innenwand des Rohrstücks ausbildet, dem Verlauf der spiralförmigen Falten folgen, so dass die Strömungsfäden im Randbereich ebenfalls spiralförmig verlaufen und dem Fluid ein gewünschter Drall aufgeprägt wird. Aufgrund strömungstechnischer Effekte werden nicht nur die randseitigen Strömungsschichten von dem Drall erfasst, vielmehr wird die gesamte Strömung durch das Rohrstück einen Drall aufgeprägt bekommen und dementsprechend mehr oder wendiger spiralförmig durch das Rohrstück strömen.

Die Spiralform der Falten, die in die Rohrwandung eingebracht sind, erlaubt die Ausbildung gekrümmter Rohrstücke. Die Falten ermöglichen eine Flexibilität in Querrichtung und auch in Achsrichtung, so dass das Rohrstück radial umgebogen sowie in der Länge gestaucht und verlängert werden kann. Auch bei gekrümmten Rohrstücken ist der Strömungswiderstand nicht oder zumindest nicht wesentlich eingeschränkt, da die randseitigen, der Innenwandung unmittelbar benachbarten Strömungsschichten des Fluids dem spiralförmigen Faltenverlauf folgen, so dass kein oder kein wesentlicher Druckverlust entsteht.

Im Unterschied zu balgförmigen Rohrstücken, die Falten mit ausschließlicher Orientierung in Querebenen senkrecht zur Rohrlängsachse aufweisen, stellen die spiralförmigen Falten kein wesentliches Strömungshindernis dar. Zugleich bestehen dieselben Verformungsmöglichkeiten in Achs- und Radialrichtung wie bei den balgförmigen Rohrstücken.

Ein weiterer Vorteil der Spiralform der Falten liegt darin, dass in dem Fluid mitgeführte Schmutzpartikel durch den Drall im Fluid radial nach außen wandern und sich im Faltengrund, also an der Innenseite des Rohrstücks ablagern. Zugleich wird aber die Strömung des Fluids entlang der Spiralform der Falten aufrechterhalten. Auch dies ist im Gegensatz zu balgförmigen Rohrkrümmern zu sehen, bei denen sich Schmutzpartikel in den Falten quer zur Strömungsrichtung ablagern und die Falten zusetzen, wodurch die Durchströmung in Achsrichtung beeinträchtigt wird.

Die Steigung der spiralförmigen Falten - also der Winkel zwischen der Filterlängsachse und der Verbindungslinie zwischen den um 180° winkelversetzten, auf gegenüberliegenden Umfangsseiten liegenden Faltenspitzen einer durchgehenden Falte - beträgt vorteilhaft zwischen 30° und 85°. Bei einem verhältnismäßig steilen Winkel von 85° nähern sich die Falten einer parallelen Anordnung in Ebenen vertikal zur Längsachse an, sie besitzen aber noch Spiralform und damit eine Komponente in Längsrichtung, die strömungsunterstützend wirkt. Bei einem verhältnismäßig kleinen Winkel für die Steigung von 30° verlaufen die Falten dagegen schräger mit einer größeren Komponente in Längsrichtung. Dies unterstützt zwar die Strömung des Fluids durch das Innere des Rohrstücks, jedoch sind die Verformungsmöglichkeiten bei einem größeren Winkel der Steigung besser. Insgesamt stellt der Winkelbereich zwischen 30° und 85° einen bevorzugten Bereich dar, innerhalb dem sowohl die Verformbarkeit in Achs- und Querrichtung als auch die Durchströmung mit dem Fluid ausreichend gut und der Druckverlust hinreichend klein ist. Innerhalb des angegebenen Wertebereiches zwischen 30° und 85° können auch sämtliche Zwischenwerte für die Steigung vorkommen, also sämtliche Werte in 1°-Winkelschritten zwischen den genannten oberen und unteren Grenzen.

Die Faltentiefe, also der radiale Abstand zwischen dem Faltengrund und der Faltenspitze einer Falte beträgt vorteilhaft zwischen 5 % und 25 % des Außendurchmessers des Rohrstückes. Auch innerhalb dieses Wertebereiches kann die Faltentiefe sämtliche Zwischenwerte einnehmen, beispielsweise in 1-%-Schritten zwischen 5 % und 25 %. Dieser Wertebereich zeichnet sich zum einen durch eine ausreichend große Faltentiefe aus, um der Strömung einen Drall aufzuprägen und die Strömung insbesondere bei gekrümmten Rohrstücken ohne signifikanten Druckverlust um die Krümmung zu leiten. Es können verhältnismäßig kleine Krümmungsradien realisiert werden. Innerhalb des angegebenen Wertebereiches zwischen 5 % und 25 % liegt ein besonders bevorzugter Bereich etwa in der Größenordnung zwischen 10 % und 15 % des Außendurchmessers.

Auch die Faltenteilung, also der axiale Abstand zwischen benachbarten Falten, kann als Funktion des Außendurchmessers angegeben werden. Für die Faltenteilung hat es sich als zweckmäßig erwiesen, diese zwischen 10 % und 50 % des Außendurchmessers, beispielsweise in der Größenordnung von 20 % bis 30 % auszuführen, bezogen auf den Außendurchmesser des Rohrstücks. Auch für die Faltenteilung gilt, dass sämtliche Zwischenwerte zwischen minimalem und maximalem Wert des Außendurchmessers in 1-%-Schritten auftreten können.

Als Material für das Rohrstück kommen sowohl Kunststoffe mit einer im Prinzip festen Wandung in Betracht, wobei die Beweglichkeit der Wandung durch die Falten realisiert wird, also auch weiche, nachgiebige bzw. vliesartige Stoffe, die bevorzugt aus synthetischem Material auf Polymerbasis hergestellt werden, gegebenenfalls aber auch aus natürlichen Werkstoffen auf Zellulosebasis produziert werden können. Auch bei einer Ausführung des Rohrstücks aus dem vliesartigen Stoff besteht eine ausreichend hohe Stabilität der Filterwandung, die insbesondere durch die Falten in der Wandung zustande kommt.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 ein Rohrstück in Seitenansicht mit spiralförmigen Falten in der Rohrwandung,
Fig. 2 eine schematische Darstellung eines Rohrstücks in Draufsicht mit schematisch eingezeichnetem Verlauf der spiralförmigen Falten,
Fig. 3 eine perspektivische Ansicht eines gekrümmten Rohrstücks mit spiralförmigen Falten, eingesetzt zwischen zwei Rohrleitungsabschnitten.

### Ausführungsformen der Erfindung

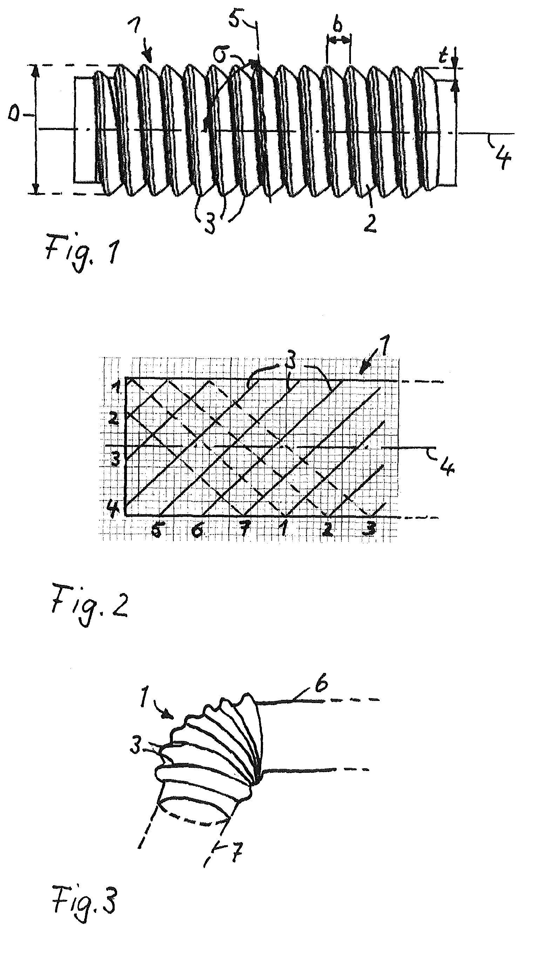

Das in Fig. 1 dargestellte Rohrstück 1 wird bevorzugt in Rohrleitungen im Ansaugtrakt einer Brennkraftmaschine für die Strömung der dem Motor zuzuführenden Verbrennungsluft eingesetzt. Möglich ist aber auch eine Anwendung im Abgasstrang oder allgemein in Rohrleitungen für gasförmige oder flüssige Fluide.

Das Rohrstück 1 weist in der Rohrwandung 2 Falten 3 auf, die sich spiralförmig um die Längsachse 4 winden und somit eine Richtungskomponente in Längsrichtung des Rohrstückes 1 aufweisen. Diese spiralförmigen Falten 3 verleihen dem Rohrstück 1 eine Verformungsmöglichkeit sowohl in Achsrichtung, wodurch das Rohrstück 1 gestaucht oder gelängt werden kann, als auch in Radialrichtung, so dass insbesondere ein Abknicken und Verformen zu einem Rohrkrümmer möglich ist. Zugleich weist dieses Rohrstück 1 eine hohe Stabilität auf, wodurch eine Fertigung des Rohrstückes beispielsweise aus einem natürlichen oder synthetischen Filtermaterial, insbesondere auf Polymerbasis, in Betracht kommt. Möglich ist aber auch eine Kunststoffausführung.

Dargestellt ist in Fig. 1 der Steigungswinkel σ, mit dem der Winkel zwischen der Längsachse 4 des Rohrstückes 1 und einer verbindenden Geraden 5 zwischen zwei um 180° winkelversetzten, auf gegenüberliegenden Umfangsseiten liegenden Faltenspitzen einer durchgehenden Falte bezeichnet wird. Der Steigungswinkel σ liegt bevorzugt in einem Winkelbereich zwischen 30° und 85°. Im Ausführungsbeispiel beträgt σ etwa 85°.

Die Faltenteilung b zwischen zwei unmittelbar benachbarten Falten liegt vorteilhaft in einem Wertebereich zwischen 10 % und 50 % des Außendurchmessers D des Rohrstückes 1. Im Ausführungsbeispiel beträgt die Faltenbreite b knapp 20 % des Außendurchmessers D.

Die Faltentiefe t, mit der der radiale Abstand zwischen dem Faltengrund und der Faltenspitze einer Falte 3 bezeichnet ist, liegt zweckmäßig in einem Wertebereich zwischen 5 % und 25 % des Außendurchmessers D des Rohrstückes 1. Im Ausführungsbeispiel beträgt die Faltentiefe etwas mehr als 10 % des Außendurchmessers D.

Wie der schematischen Darstellung nach Fig. 2 zu entnehmen, können eine Mehrzahl zueinander parallel verlaufender und sich spiralförmig in der Wandung um die Längsachse 4 windender Falten 3 vorgesehen sein. Horizontal und vertikal sind in Fig. 2 die einzelnen Falten mit Bezugsziffern zwischen 1 und 7 durchnummeriert, wobei die Falten mit durchgezogenem Strich die sichtbaren, oben liegenden Faltenkanten und die Falten mit strichlierter Linie die zugehörigen, auf der Gegenseite verlaufenden, dem Betrachter abgewandten Faltenkanten darstellen. In dem Ausführungsbeispiel nach Fig. 2 sind insgesamt sieben parallel zueinander verlaufender und sich spiralförmig windender Falten 3 vorgesehen.

In Fig. 3 ist das Rohrstück 1 zu einem Rohrkrümmer gebogen, der zwischen zwei Rohrleitungsabschnitten 6 und 7 eingesetzt ist. Der Rohrkrümmer 1 überdeckt einen Winkelbereich von annähernd 90°, wobei diese Krümmung aufgrund der in die Rohrwandung eingebrachten spiralförmigen Falten 3 ohne weiteres von dem ursprünglich geradlinig ausgeführten Rohrstück 1 ausgeführt werden kann.

Das Rohrstück eignet sich insbesondere für den Einsatz in einer Filtereinrichtung für die Filtration von Verbrennungsluft in Brennkraftmaschinen. Es ist aber auch eine Anwendung für die Filtration der Fahrzeuginnenraumluft oder allgemein für die Filtration in Fahrzeugen möglich.

## Patentansprüche

1. Rohrstück in einer Rohrleitung für Fluide, **dadurch gekennzeichnet, dass** in die Rohrwandung (2) des Rohrstücks (1) mindestens eine Falte (3) eingebracht ist, die spiralförmig um die Rohrlängsachse (4) verläuft, wobei das Rohrstück (1) axial und in Querrichtung flexibel ausgebildet ist.

2. Rohrstück nach Anspruch 1, **dadurch gekennzeichnet, dass** der Steigungswinkel σ _{w}) der spiralförmigen Falte (3) - der Winkel zwischen der Filterlängsachse (4) und der Verbindungslinie zwischen den um 180° winkelversetzten Faltenspitzen einer Falte (3) - zwischen 30° und 85° beträgt.

3. Rohrstück nach Anspruch 1 oder 2, **dadurch gekennzeichnet, dass** die Faltentiefe (t) - der radiale Abstand zwischen dem Faltengrund und der Faltenspitze einer Falte - zwischen 5% und 25% des Außendurchmessers (D) des Rohrstücks (1) beträgt.

4. Rohrstück nach Anspruch 3, **dadurch gekennzeichnet, dass** die Faltentiefe (t) zwischen 10% und 15% beträgt.

5. Rohrstück nach einem der Ansprüche 1 bis 4, **dadurch gekennzeichnet, dass** eine Mehrzahl zueinander paralleler, spiralförmiger Falten (3) vorgesehen sind.

6. Rohrstück nach einem der Ansprüche 1 bis 5, **dadurch gekennzeichnet, dass** die Faltenteilung (b) - der axiale Abstand zwischen benachbarten Falten (3) - zwischen 10% und 50% des Außendurchmessers (D) des Rohrstücks (1) beträgt.

7. Rohrstück nach einem der Ansprüche 1 bis 6, **dadurch gekennzeichnet, dass** das Rohrstück (1) aus Kunststoff besteht.

8. Rohrstück nach einem der Ansprüche 1 bis 7, **dadurch gekennzeichnet, dass** das Rohrstück (1) aus einem weichen, nachgiebigen Material besteht.

9. Rohrstück nach einem der Ansprüche 1 bis 8, **dadurch gekennzeichnet, dass** das Rohrstück (1) aus synthetischem Filtermaterial besteht, insbesondere aus einem Filtermaterial auf Polymerbasis.

10. Rohrstück nach einem der Ansprüche 1 bis 9, **dadurch gekennzeichnet, dass** das Rohrstück (1) als Rohrkrümmer ausgebildet ist.

11. Verwendung eines Rohrstücks nach einem der Ansprüche 1 bis 10 in einer Rohrleitung für gasförmige Fluide, insbesondere für die Verbrennungsluft einer Brennkraftmaschine.
